# EUROPÄISCHE PATENTSCHRIFT

(11) **EP 3 804 494 B1**
(45) Veröffentlichungstag und Bekanntmachung des Hinweises auf die Patenterteilung: **20.09.2023**
(21) Anmeldenummer: 20200183.0
(22) Anmeldetag: 06.10.2020
(51) Int. Cl.: A01D 41/14

(54) **SCHNEIDWERK MIT IN HORIZONTALER RICHTUNG VERSTELLBARER HASPEL**
CUTTING DEVICE WITH REEL ADJUSTABLE IN THE HORIZONTAL DIRECTION
MÉCANISME DE COUPE POURVU DE RABATTEUR RÉGLABLE DANS LA DIRECTION HORIZONTALE

(30) Priorität: 11.10.2019 DE 102019127507
(43) Veröffentlichungstag der Anmeldung: 14.04.2021
(73) Patentinhaber: Carl Geringhoff GmbH & Co. KG, 59227 Ahlen (DE)
(72) Erfinder: Pokriefke, Michael, 27798 Hude (DE); Sudhues, Steffen, 59227 Ahlen (DE); Hanskötter, Werner, 59320 Ennigerloh (DE)
(74) Vertreter: Weeg, Thomas

(56) Entgegenhaltungen:
- EP-A1- 3 420 797
- EP-A1- 3 469 877
- WO-A1-2018/122744
- DE-A1- 1 482 897
- DE-A1- 19 525 495

## Beschreibung

Die vorliegende Erfindung bezieht sich auf ein Schneidwerk zum Anbau an eine Erntemaschine nach dem Oberbegriff des Anspruchs 1.

Wenn in dieser Beschreibung von "vorne" und "hinten" die Rede ist, so werden diese Begriffe immer bezogen auf die Arbeitsrichtung des Schneidwerks verwendet. Die Arbeitsrichtung ist die Richtung, in die das Schneidwerk bewegt wird, um Erntegut zu schneiden.

Aus der Schrift DE 10 2011 116 341 A1 ist ein Schneidwerk bekannt, das aus mehreren Rahmenteilen zusammengesetzt ist, die sich jeweils über eine Teilarbeitsbreite erstrecken, und die gelenkig um eine sich zumindest annähernd in Arbeitsrichtung des Schneidwerks erstreckende Achse miteinander verbunden sind. In dem in dieser Schrift gezeigten Ausführungsbeispiel ist ein mittleres Rahmenteil offenbart, das mit zwei seitlichen Rahmenteilen gelenkig verbunden ist. Die in dieser Schrift offenbarten Förderflächen eines Draper-Schneidwerks werden durch umlaufend angetriebene Förderbänder gebildet, die das geschnittene Erntegut von dem jeweiligen Schnittpunkt am Messerbalken als Schneidelement zu einer mittigen und rückwärtig angeordneten Abgabestelle abfördern. Die Förderbänder bilden auf diese Weise gleichzeitig Förderorgane aus, und die Förderfläche und die Förderorgane befinden sich in einer identischen Ebene.

Es ist aber auch möglich, die Förderfläche bei starren Schneidwerken anstelle von Draper-Schneidwerken als Schneidwerksmulde mit einem Blechboden auszugestalten, über den das Erntegut mittels gesonderter Förderorgane abgefördert wird. Bei den in starren Schneidwerken eingesetzten Förderorganen kann es sich beispielsweise um rotierend angetriebene Förderschnecken handeln, die Schneckenbleche aufweisen, die an einer Welle gehalten sind, die sich quer zur Arbeitsrichtung des Schneidwerks über zumindest eine Teilarbeitsbreite des Schneidwerks erstreckt, und bei deren Drehung das Erntegut von den Schneckenblechen mitgenommen wird.

Als weiteres Förderorgan sind Schneidwerke mit Haspeln ausgestattet, die sich quer zur Arbeitsrichtung des Schneidwerks erstrecken. Die Haspeln sind rotierend angetrieben und tauchen mit den auf einer Querstange gehaltenen Haspelzinken bei der Erntearbeit in einer abwärts gerichteten Bewegung von oben und je nach Haspelstellung in horizontaler Richtung vor oder hinter dem Messerbalken in den Bestand des Ernteguts ein, um das Erntegut beim Schnitt abzustützen und nach dem Schnitt auf der Förderfläche abzulegen. Die Haspeln sind an höhenverstellbaren Haspeltragarmen gehalten, die von einer sich quer zur Arbeitsrichtung des Schneidwerks über zumindest eine Teilarbeitsbreite des Schneidwerks erstreckende Torsionswelle gehalten und über die Torsionswelle mit dem Rahmen verbunden sind. Die Höhenverstellung der Haspel erfolgt über eine Drehung der Torsionswelle.

Bei Schneidwerken mit mehreren Rahmenteilen, die gelenkig miteinander verbunden sind, stellt sich das Problem, dass eine einteilige Haspel ihre Förderfunktion nicht mehr optimal erfüllen kann, wenn sich die Rahmenteile des Schneidwerks nicht mehr in einer gemeinsamen Ebene befinden. Um die Haspel besser an Bewegungen der Rahmenteile anpassen zu können, ist es bekannt, die Haspel ein- oder mehrfach zu teilen, so dass dann die einzelnen Haspelteile den Bewegungen der zugeordneten Rahmenteile besser folgen können. Beispiele für Schneidwerke mit geteilten Haspeln, die in vertikaler Richtung unterschiedliche Schwenklagen einnehmen können, finden sich in den Schriften DE 1 482 897 A1, DE 195 25 495 A1, EP 3 420 797 A1 und EP 3 469 877 A1. Ein weiteres Beispiel für ein Draper-Schneidwerk mit einer geteilten Haspel findet sich in der Schrift EP 3 420 801 A1. Dort ist es als nachteilig beschrieben, dass die Haspelwellen der einzelnen Haspelteile nicht mehr in einer Linie ausgerichtet sind. Um die Haspelwellen wieder in einer Linie auszurichten, ist ein Hydrauliksystem offenbart, das eine Korrektur der Haspelwellenstellungen ermöglicht.

In der Schrift DE 10 2015 109 191 A1 ist ein Draper-Schneidwerk beschrieben, bei dem die Haspel ebenfalls geteilt ist. Hier soll eine besondere Beschaltung einen Gleichlauf der Hydraulikzylinder zum Heben und Senken der Haspelteile sicherstellen.

Die Haspel legt mit ihren Haspelteilen bei der Erntearbeit über die gesamte Arbeitsbreite kontinuierlich Erntegut auf der Förderfläche ab. Abgesehen von eher geringfügigen Ertragsunterschieden zwischen Teilflächen fällt dabei grundsätzlich an Teilbreiten der gesamten Arbeitsbreite des Schneidwerks dieselbe Menge an Erntegut wie an identischen Teilbreiten an anderen Stellen des Schneidwerks. Trotz dieses annähernd gleichmäßigen Anfalls von Erntegut über die gesamte Arbeitsbreite des Schneidwerks hinweg ist das Schneidwerk dabei aber nicht gleichmäßig belastet. Die auf der Förderfläche von der Haspel abgelegte Erntegutmenge wird kontinuierlich von außen nach innen zur Abgabestelle des Schneidwerks transportiert. Insbesondere bei Schneidwerken mit einer größeren Arbeitsbreite ergibt sich dabei das Problem, dass durch das auf diesem Transportweg ständig zusätzlich aufgelegte Erntegut das auf der Förderfläche bewegte Erntegutpaket bis zur Abförderung an die Abgabestelle ständig anwächst und zunehmend dicker wird. Bei einer korrekt eingestellten Haspeldrehzahl und -position und einer passend abgestimmten Fördergeschwindigkeit der Förderelemente wird das Erntegut mit den Ähren voraus in einer Richtung entgegen der Arbeitsrichtung auf der Förderfläche abgelegt. Bei einer solchen Ablage können die Ähren der Dreschtrommel drusch- und durchsatzfreundlich tangential ausgerichtet zugeführt werden. Dabei baut sich auf der Förderfläche entlang des Förderwegs bis zur Abgabe des Ernteguts an die Abgabestelle eine Materialschicht auf. Wenn dabei je nach Erntegut die Stängel dünner sind als die Ähren, ergibt sich vorne im Bereich der Schneidelemente wegen der dünnen Stängel eine noch relativ dünne Materialschicht, die aber weiter nach hinten hin dicker wird, wo die Ähren aufeinanderliegen. Diese Materialschicht hat dann in der Seitenansicht eine annähernd dreieckige Querschnittsform, etwa wie bei einem Blumenstrauß. Je weiter die Materialschicht auf die Mitte des Schneidwerks zu bewegt wird, umso steiler wird der Anstellwinkel der Oberfläche der bisher angesammelten Materialschicht. Dabei wird auch das Risiko immer größer, dass die Haspel das hinzukommende weiter innen geschnittene Erntegut nicht mehr auf der Oberfläche der auf der Förderfläche bewegten Materialschicht ablegen kann, weil dieses bei der Ablage nach vorne und unten über die Schneidelemente hinweg von der Oberfläche der Materialschicht abrutscht und als Ernteverlust auf dem Acker liegenbleibt. Es kann also über die Arbeitsbreite hinweg nur eine begrenzte Menge an Erntegut vom Schneidwerk aufgenommen und ohne Gutverluste abgefördert werden. Die theoretisch mögliche Arbeitsbreite eines Schneidwerks wird dadurch begrenzt.

Ein weiteres gattungsgemäßes Schneidwerk ist aus der Schrift WO 2018/122744 A1 bekannt. Die äußeren Haspelteile sind nach oben klappbar, um die Transportbreite dieses Schneidwerks zu verringern. Bei der Erntearbeit unterscheidet sich die Funktionsweise der Haspel nicht von den Haspeln in den vorstehend beschriebenen Schneidwerken.

Es ist die Aufgabe der vorliegenden Erfindung, die Aufnahmekapazität des Schneidwerks über die Arbeitsbreite hinweg zu verbessern.

Die Aufgabe wird für ein gattungsgemäßes Schneidwerk durch die kennzeichnenden Merkmale des Anspruchs 1 gelöst.

Durch die Winkelstellung der Haspelteile bezogen auf eine Querlinie zur Längsmittelachse durch das Schneidwerk können die schräg gestellten Haspelteile mit ihren weiter nach hinten verlagerten Haspelabschnitten das geschnittene Erntegut weiter von den Schneidelementen entfernt in einer größeren Tiefe der Förderfläche ablegen. Je weiter diese Materialschicht zur Mitte des Schneidwerks hin befördert wird, umso weniger weit und tief werfen die dort befindlichen Haspelabschnitte wegen der Schrägstellung der Haspelwelle das Erntegut auf der Förderfläche ab. Dadurch kommen die dort auf die Materialschicht aufgelegten Ähren nicht in einer gleichen Tiefenstaffelung auf darunter liegenden Ähren zu liegen, sondern es ergibt sich von außen nach innen über den Transportweg der Materialschicht hinweg eine in der Tiefe der Förderfläche geschuppte Ablage des Ernteguts. Durch die geschuppte Ablage ist die Materialschicht weniger dick, und die Oberfläche der Materialschicht ist in vertikaler Richtung in einem kleineren Anstellwinkel zu den Schneidelementen hin angestellt. Dadurch neigt das mehr zur Mitte des Schneidwerks geschnittene Erntegut weniger dazu, bei der Ablage durch die Haspel nach vorne hin von der schon aufgebauten Materialschicht abzurutschen und aus dem Schneidwerk zu fallen.

Die Förderfläche wird über ihre Tiefe hinweg besser und gleichmäßiger gefüllt und zur Abförderung des geschnittenen Ernteguts genutzt. Die Förderleistung des Schneidwerks ist durch die Schrägstellung der Haspelteile deutlich erhöht.

Bei einer Haspel, die in zwei Haspelteile aufgeteilt ist, können beide Haspelteile zueinander schräg gestellt werden. Jedes schräg gestellte Haspelteil legt dann über eine Hälfte der gesamten Arbeitsbreite des Schneidwerks das Erntegut in der Tiefe gestaffelt auf der Förderfläche ab. Bei einer Haspel, die in drei Haspelteile aufgeteilt ist, können die beiden äußeren Haspelteile schräg zum mittleren Haspelteil gestellt werden. Die beiden äußeren Haspelteile sorgen dann auf der von ihnen abgedeckten Teilarbeitsbreite dafür, dass das Erntegut in der Tiefe gestaffelt auf der Förderfläche abgelegt wird.

Die Schrägstellung der Haspelteile kann bewirkt werden, indem die Haspelwellen an den inneren, einander zugewandten Enden der Haspelteile aus einer Normalstellung, in der die Haspelwellen der Haspelteile zur Querlinie zur Längsmittelachse durch das Schneidwerk parallel angeordnet sind, nach vorne verlagert werden. Wenn die Haspelwellen an ihren äußeren Enden dabei ortsfest bleiben, ergibt sich daraus die Schrägstellung der Haspelteile in einer horizontalen Ebene. Die Schrägstellung der Haspelteile kann auch bewirkt werden, indem die Haspelwellen an den äußeren, einander abgewandten Enden der Haspelteile aus einer Normalstellung, in der die Haspelwellen der Haspelteile zur Querlinie zur Längsmittelachse durch das Schneidwerk parallel angeordnet sind, nach hinten verlagert werden. Wenn die Haspelwellen an ihren inneren, einander zugewandten Enden dabei ortsfest bleiben, ergibt sich daraus auch die Schrägstellung der Haspelteile in einer horizontalen Ebene. Schließlich können die Haspelwellen der Haspelteile auch an ihren äußeren und inneren Enden gegenläufig bewegt werden, woraus sich dann die Schrägstellung der Haspelteile ergibt.

Die Haspelwellen können direkt durch die Verlagerung des Haspelwellenlagers auf dem jeweiligen Haspeltragarm in die Schrägstellung gebracht werden. Es ist aber auch möglich, die Haspelwellen indirekt zu verlagern, indem beispielsweise einer oder beide Haspeltragarme aus einer Normalstellung in Längsrichtung verlagerbar und/oder verlängerbar ausgestaltet sind, und zwar aus einer Normalstellung in eine Stellung, in der sich eine Schrägstellung der Haspelwelle zur Querachse in einer horizontalen Ebene ergibt.

Indem die Schrägstellung der Haspelteile wahlweise eingestellt werden kann, ist es möglich, das Schneidwerk je nach Bedarf mit den Haspelteilen in einer Normalstellung oder in einer Schrägstellung zu fahren. Das Schneidwerk kann auf diese Weise an eine jeweilige Erntesituation optimal angepasst werden. Vorteilhaft sieht die Vorrichtung zur Schrägstellung der Haspelteile auch nicht nur eine einzige, sondern mehrere Schrägstellungen oder eine stufenlose Verstellmöglichkeit zwischen der Normalstellung und einer maximalen Schrägstellung vor, wodurch die Ablage noch genauer an die jeweiligen Erntebedürfnisse anpassbar ist.

Nach einer Ausgestaltung der Erfindung handelt es sich bei der Vorrichtung, mit der die Haspelwellen aus der Normalstellung in die Schrägstellung verlagerbar sind, um einen Stellmotor, mit dem ein dem Stellmotor zugeordneter Wellenstummel der Haspelwelle in horizontaler Richtung verlagerbar ist. Bei dem angetriebenen Stellmotor kann es sich um den Hydraulikzylinder handeln, mit dem das Haspelteil durch eine Ortsverlagerung des Wellenlagers der Haspelwelle in einer horizontalen Richtung entlang des Haspeltragarms verlagerbar ist, um die Position des Haspelteils an die Bedürfnisse in einer konkreten Erntesituation anzupassen, oder es ist ein gesonderter Hydraulikzylinder vorhanden, der nur dem Zweck dient, eine Schrägstellung herbeizuführen oder diese wieder aufzuheben. Der für die Horizontalverstellung vorgesehene Hydraulikzylinder kann für die zusätzliche Möglichkeit zur Schrägstellung des Haspelteils gegenüber einem Hydraulikzylinder, der keine Schrägstellung ermöglicht, eine längere Kolbenstange aufweisen, um einen größeren Verstellweg abzudecken. Der Stellmotor kann aber auch auf einen Verstellschlitten wirken, auf dem die Haspelwelle zusammen mit dem Hydraulikzylinder zur Längsverstellung des betreffenden Haspelteils montiert ist und mit dem diese in horizontaler Richtung verlagerbar sind, um eine Schrägstellung zu bewirken, oder auf den Haspeltragarm, der in seiner Position vor- oder zurückbewegt wird oder der teleskopiert wird. Der Stellmotor kann nicht nur hydraulisch, sondern auch elektrisch, pneumatisch oder auf sonstige Weise angetrieben sein.

Nach einer Ausgestaltung der Erfindung ist der ein Haspelteil in eine Schrägstellung bringende oder aus einer Schrägstellung in eine Normalstellung zurückbewegende Stellmotor über eine Steuerung einzeln ansteuerbar. Ein Stellmotor ermöglicht über die Steuerung eine gezielte Fernbetätigung der Schrägstellung der Haspelteile aus der Kabine der Erntemaschine heraus, wenn dort eine entsprechende Steuerung angeordnet ist. Der Fahrer der Erntemaschine kann auf diese Weise die Haspelteile einzeln so einstellen, dass sich eine optimale Ablage und Verteilung des Ernteguts über die Tiefe der Förderelemente ergibt.

Nach einer Ausgestaltung der Erfindung besteht die Vorrichtung zur Schrägstellung aus einem manuell verlagerbaren Schlitten, der in verschiedenen Positionen am Haspeltragarm festlegbar ist, oder aus verschiedenen Montagepositionen, in denen der Stellmotor zur Verlagerung der Haspelwellen oder die Haspelwellen in verschiedenen Positionen auf dem Haspeltragarm festlegbar sind. Die Position der Haspelwelle kann dann durch die Verlagerung des Schlittens oder des Stellmotors oder der Haspelwelle manuell auf ein gewünschtes Schrägstellungsmaß eingestellt werden.

Nach einer Ausgestaltung der Erfindung sind die äußeren Enden der schräg gestellten Haspelteile in der Schrägstellung im Verhältnis zu den inneren Enden der schräg gestellten Haspelteile weiter nach hinten verlagert. Aus der Ansicht von oben ergibt sich in der Schrägstellung also eine V-förmige Anordnung der schräg gestellten Haspelteile. Wenn die äußeren Enden der schräg gestellten Haspelteile weiter hinten liegen, wird bei der Abförderung des geschnittenen Ernteguts das an den äußeren Enden des Schneidwerks geschnittene Erntegut am weitesten und tiefsten nach hinten auf der Förderfläche abgelegt. Je weiter das geschnittene Erntegut als Materialschicht zur Mitte des Schneidwerks hin befördert wird, umso weiter auf die Schneideinrichtung zu wird das hinzu kommende Erntegut auf die beförderte Materialschicht abgelegt. Wenn die dickeren Ähren nach hinten weisend auf der Förderfläche abgelegt werden, ist nur so eine geschuppte Ablage des Ernteguts über die Tiefe der Förderfläche möglich, wenn die Stängel des Ernteguts möglichst flach auf der Förderfläche liegen sollen.

Nach einer Ausgestaltung der Erfindung sind als Förderelemente umlaufend angetriebene Bandförderer verwendet. Da die Bandförderer über ihre volle Bandbreite förderaktiv sind, kann die dadurch vorgegebene Förderfläche durch schräg gestellte Haspelteile und die daraus resultierende geschuppte Ablage des Ernteguts in ihrer vollen Tiefe genutzt werden. Die Erfindung ist auch bei herkömmlichen Schneidwerken einsetzbar, bei denen das Erntegut mit einer Förderschnecke abgefördert wird. Da das Erntegut dort aber je nach Ausgestaltung des Förderprinzips der Förderschnecke - oberschlächtig oder unterschlächtig fördernd - auf der Förderschnecke oder unter der Förderschnecke liegend befördert wird, ist die Tiefe der von der Haspel zugänglichen Förderfläche nicht so groß wie bei den Draper-Schneidwerken, und es ergibt sich auch nicht eine so ausgeprägte geschuppte Lage des Ernteguts, wie sie sich bei einem Draper-Schneidwerk einstellt. Deshalb können die erfindungsgemäßen Vorteile bei solchen Schneidwerken prinzipbedingt nicht voll ausgeschöpft werden.

Nach einer Ausgestaltung der Erfindung ist der Rahmen des Schneidwerks in mehrere Rahmenteile unterteilt, die zueinander verschwenkbar sind, und die Arbeitsbreiten der äußeren Haspelteile entsprechen den Arbeitsbreiten der diesen zugeordneten äußeren Rahmenteile oder überschreiten diese. Bei einem Schneidwerk, das in mehrere Segmente aufgeteilt ist, damit sich das Schneidwerk mit den einzelnen Rahmenteilen besser an eine veränderliche Bodenkontur anpassen kann, ist es vorteilhaft, wenn die Arbeitsbreiten der äußeren Haspelteile den Arbeitsbreiten der äußeren Rahmenteile zumindest annähernd entsprechen. Bei einer solchen Entsprechung können die äußeren Haspelteile immer dicht am Messerbalken gehalten sein und den Bewegungen des jeweiligen zugeordneten Rahmenteils folgen, so dass sich eine optimale verlustfreie Abförderung des Ernteguts vom Schneidelement ergibt. Sind die äußeren Haspelteile länger als die äußeren Rahmenteile, ergibt sich bei Schwenkbewegungen der äußeren Rahmenteile im Überlappungsbereich der äußeren Haspelteile zum mittleren Rahmenteil ein größerer Abstand des Umfangsbereichs des Haspelteils zum Messerbalken, der jedoch geringere Probleme aufwirft als ein äußeres Haspelteil, das kürzer ist als der äußere Rahmenteil, weil das aufwärts schwenkende Rahmenteil mit einem Ende des mittleren Haspelteils kollidieren könnte.

Nach einer Ausgestaltung der Erfindung handelt es sich bei der Vorrichtung zur Schrägstellung der Haspelteile um eine motorisch angetriebene Verstellvorrichtung und diese weist eine Steuerung auf, mit der die Haspelteile in einer horizontalen Ebene gleichzeitig gleichsinnig in ihrer Schrägstellung verstellbar sind. Durch die gleichsinnige gleichzeitige Verstellung mehrerer Haspelteile wird die Bedienung für eine Bedienperson erleichtert. Der Gutfluss im Schneidwerk bleibt über die gesamte Arbeitsbreite gleich.

Nach einer Ausgestaltung der Erfindung handelt es sich bei der Vorrichtung zur Schrägstellung der Haspelteile um Hydraulikzylinder, die zumindest teilweise hydraulisch in Reihe geschaltet sind, die an den Außenseiten der äußeren Haspelteile vorhandenen Hydraulikzylinder sind mit Überströmventilen zur Gleichrichtung der Zylinderstellung in beiden Endlagen ausgestattet, ein dort auftretender Überstrom wird dem oder den Hydraulikzylindern an den inneren Enden der äußeren Haspelteile über eine Verbindungsleitung zugeleitet, und der oder die an den inneren Enden der äußeren Haspelteile angeordneten Hydraulikzylinder verfügen über einen längeren Verstellweg als die äußeren Hydraulikzylinder. Die Hydraulikzylinder zur Haspelhorizontalverstellung können so angeordnet sein, dass sie die äußeren Haspelteile in ihrer eingezogenen Stellung in der Normalstellung und in der ausgefahrenen Stellung in der Schrägstellung halten. Die Hydraulikzylinder können in dem Längenbereich, den alle ein Haspelteil in horizontaler Richtung bewegenden Hydraulikzylinder abdecken, aus der Normalstellung das jeweilige Haspelteil in horizontaler Richtung im Gleichlauf vorwärts und rückwärts bewegen, um die Position der Haspel an eine konkrete Erntesituation anzupassen. Das Haspelteil bleibt dabei in einer Querlage zur Arbeitsrichtung der Erntemaschine. Haben die an den Außenseiten der äußeren Haspelteile vorhandenen Hydraulikzylinder ihre vordere Endstellung erreicht, indem sie voll ausgefahren sind, so kann ein betreffendes Haspelteil in die Schrägstellung verbracht werden, indem durch die Überströmventile der äußeren Hydraulikzylinder nachfließenden Öl in den oder die an den inneren Enden der äußeren Haspelteile angeordneten Hydraulikzylinder gelangt, die über einen längeren Verstellweg verfügen und dadurch weiter nach vorne ausgefahren werden können. Durch diese Bewegung nur eines Wellenstummels der Haspelwelle eines Haspelteils mit dem längeren, an der Innenseite des äußeren Haspelteils vorhandenen Hydraulikzylinder gelangt das Haspelteil in die Schrägstellung. Werden die Hydraulikzylinder aus ihrer vorderen Endstellung eingefahren und damit nach hinten bewegt, bewegen sich diese bis zum Erreichen der hinteren Endpositionen der an den Außenseiten der äußeren Haspelteile vorhandenen Hydraulikzylinder in der Schrägstellung über den Verstellbereich. Mit dem Erreichen der hinteren Endposition der an den Außenseiten der äußeren Haspelteile vorhandenen Hydraulikzylinder öffnen sich die Überstömventile dieser Hydraulikzylinder und ermöglichen eine weitere Bewegung des oder der längeren, an der Innenseite des äußeren Haspelteils vorhandenen Hydraulikzylinder, bis diese ebenfalls vollständig eingefahren sind und das zugehörige Haspelteil dadurch in die Normalstellung verbracht worden ist.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: Ansicht auf ein Schneidwerk von oben mit Haspelteilen in Normalstellung,
- Fig. 2:: die Ansicht von oben auf das in Fig. 1 gezeigte Schneidwerk mit den Haspelteilen in einer Schrägstellung, und
- Fig. 3:: eine Ausschnittsansicht auf ein seitliches Rahmenteil mit schräg gestelltem Haspelteil.

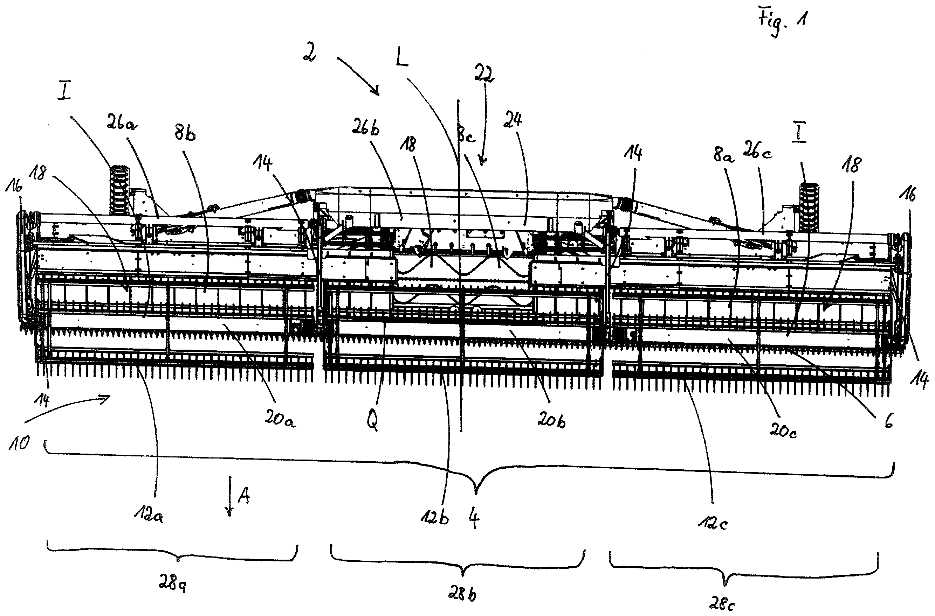

In Fig. 1 ist ein Schneidwerk 2 aus einer Ansicht von oben gezeigt. Das Schneidwerk 2 verfügt über eine Arbeitsbreite 4. An der Vorderseite des Schneidwerks 2 befindet sich ein Messerbalken als Schneidelement 6, der oszillierend angetrieben ist und über eine größere Anzahl von nebeneinander angeordneten Messerklingen verfügt, die ebenfalls Schneidelemente 6 bilden.

Hinter dem Schneidelement 6 befinden sich als Ausführungsbeispiele für Förderelemente 8 zwei äußere Bandförderer 8a und 8b, die quer zur Arbeitsrichtung A des Schneidwerks 2 das geschnittene Erntegut zur Mitte hin befördern, während sich in der Mitte des Schneidwerks 2 ein weiterer Bandförderer 8c befindet, der das zugeförderte Erntegut nach hinten in eine Richtung entgegen der Arbeitsrichtung A abfördert.

Über den Bandförderern 8a befindet sich eine Haspel 10, die rotierend angetrieben ist und das Erntegut während des Schnitts abstützt und das geschnittene Erntegut nach dem Schnitt auf die Bandförderer 8a, 8b, 8c abwirft. Im Ausführungsbeispiel bilden die Bandförderer 8a, 8b, 8c jeweils eine Förderfläche 18, auf denen das geschnittene Erntegut abgefördert wird. Bei anderen Schneidwerken 2 als einem Draper-Schneidwerk kann die Förderfläche 18 auch als ein einfaches Bodenblech ausgebildet sein, das keinerlei Antrieb aufweist. Die seitlichen äußeren Enden des Schneidwerks 2 sind durch Seitenwände 16 abgedeckt.

Die Haspel 10 ist im Ausführungsbeispiel in drei Haspelteile 12a, 12b und 12c unterteilt. Die Haspelteile 12a, 12b, 12c sind jeweils an Haspeltragarmen 14 gehalten, die höhenverstellbar ausgebildet sind. In der Fig. 1 befinden sich die Haspelteile 12a, 12c in ihrer Normalstellung I.

Die Haspelteile 12a, 12b, 12c sind jeweils über eine Haspelwelle 20a, 20b, 20c auf den zugehörigen Haspeltragarmen 14 abgestützt. Die Haspelteile 12a, 12b, 12c sind über die Haspelwellen 20a, 20b, 20c drehend antreibbar. Sie werden am Schneidwerk 2 über die Haspeltragarme 14 während der laufenden Ernte in einer Höhe über dem Schneidelement 6 gehalten, in der sie das zu schneidende Erntegut beim Schnitt abstützen und dieses nach dem Schnitt auf die Bandförderer 8a, 8b, 8c abwerfen. Die Bandförderer 8a, 8b, 8c können das geschnittene Erntegut dann vom Schneidelement 6 weg bis zur Abgabestelle 22 befördern, die sich auf der Rückseite des Schneidwerks 2 in der Rückwand befindet. Durch die Abgabestelle 22 kann das geschnittene Erntegut an den Schrägförderer eines Mähdreschers abgegeben werden.

Das Schneidwerk 2 verfügt über einen Rahmen 24, wobei dieser im Ausführungsbeispiel auf drei Rahmenteile 26a, 26b, 26c aufgeteilt ist. Die Rahmenteile 26a, 26b, 26c sind gelenkig miteinander verbunden und zueinander beweglich. Sie verfügen jeweils über eine Teilarbeitsbreite 28a, 28b, 28c, die zumindest den Teilarbeitsbreiten 28a, 28b, 28c der Haspelteile 12a, 12b, 12c entspricht.

Die Haspeltragarme 14 bilden zusammen mit der zugehörigen Lagerung an den Rahmenteilen 26a, 26b, 26c, den Verstellvorrichtungen zur Höhenverstellung der Haspeltragarme 14 und den motorischen Antrieben zur Verstellung der Haspelteile 12a, 12b, 12c entlang der Arbeitsrichtung A das jeweilige Haspeltragwerk 30.

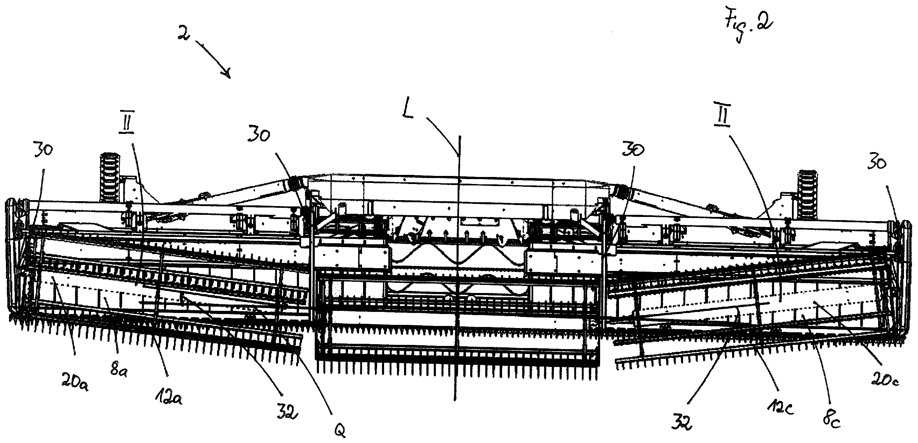

In Fig. 2 ist die in Fig. 1 gezeigte Ansicht von oben auf das Schneidwerk 2 gezeigt, wobei sich die Haspelteile 12a, 12c in einer Schrägstellung II zur Querlinie Q auf die Längsmittelachse L befinden, in der sie eine Art V-förmiger Anordnung bilden. Die Haspelteile 12a, 12c sind in einem Winkel 32 zur Querlinie Q angestellt. Durch den Winkel 32, der in einer horizontalen Ebene liegt, ergibt sich im Verhältnis zu der in Fig. 1 dargestellten Normalstellung I der Haspelteile 12a, 12c eine Schrägstellung II der Haspelteile 12a, 12c, die in Fig. 2 gezeigt ist. Insbesondere sind die äußeren Enden der Haspelteile 12a, 12c weiter nach hinten verlagert als die inneren Enden dieser Haspelteile.

Durch die Schrägstellung II der Haspelteile 12a, 12c überstreichen die beiden Haspelteile 12a, 12c über ihre Teilarbeitsbreite 28 hinweg die darunter befindlichen Bandförderer 8a, 8c in einer unterschiedlichen Tiefe. Dadurch ist es den Haspelteilen 12a, 12c möglich, das geschnittene Erntegut über die Teilarbeitsbreite 28 hinweg in einer unterschiedlichen Tiefe auf den Bandförderern 8a, 8c abzulegen, wobei im Ausführungsbeispiel das Erntegut umso weiter vorne auf den Bandförderern 8a, 8c abgelegt wird, je weiter sich das betreffende Erntegut näher zur Längsmittelachse L befindet.

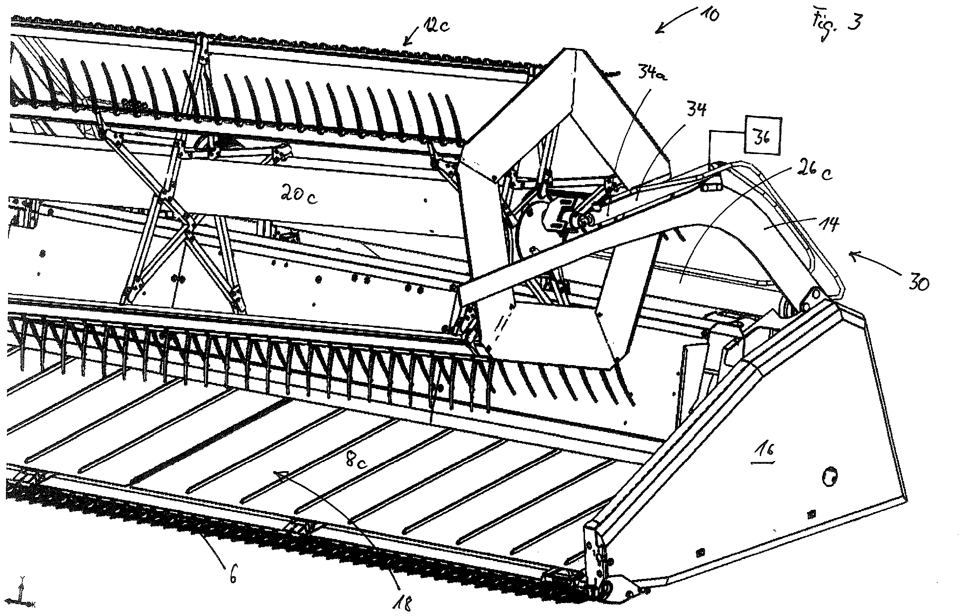

In Fig. 3 ist eine Ausschnittsansicht auf ein seitliches Rahmenteil 26c mit einem schräg gestellten Haspelteil 12c gezeigt. Unterhalb des Haspelteils 12c befindet sich der Bandförderer 8c, auf dessen Oberseite sich die Förderfläche 18 befindet.

Am Haspeltragarm 14 befindet sich eine Vorrichtung 34 in Gestalt eines Hydraulikzylinders 43a als ein Ausführungsbeispiel eines Stellmotors, mit der das Haspelteil 12c in der in Fig. 3 gezeigten Position am Haspeltragwerk 30 festgelegt ist, in der die Haspelwelle 20c in einer horizontalen Ebene eine Winkelstellung zu einer Querlinie Q zur Längsmittelachse L durch das Schneidwerk 2 aufweist. Wenn der Hydraulikzylinder, der die Vorrichtung 34 bildet, seine Kolbenstange aus der in Fig. 3 gezeigten eingefahrenen Position nach vorne ausfährt, bewegt sich das Haspelteil 12c aus der Schrägstellung II auf die Normalstellung I zu, die in der Fig. 1 gezeigt ist. Um die Vorrichtung 34 betätigen zu können, ist diese an eine Steuerung 36 angeschlossen, über die die Vorrichtung 34 als motorische Verstellvorrichtung bewegt werden kann.

Anstelle der in Fig. 3 dargestellten motorischen Verstellvorrichtung ist es auch möglich, die Lagerung der Haspelwelle 20c über eine entsprechend ausgestaltete Vorrichtung manuell zu verstellen.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Schneidwerk
- 4: Arbeitsbreite
- 6: Schneidelement
- 8a-c: Bandförderer
- 10: Haspel
- 12a-c: Haspelteile
- 14: Haspeltragarm
- 16: Seitenwand
- 18: Förderfläche
- 20a-c: Haspelwellen
- 22: Abgabestelle
- 24: Rahmen
- 26a-c: Rahmenteile
- 28: Teilarbeitsbreite
- 30: Haspeltragwerk
- 32: Winkel
- 34: Vorrichtung
- 36: Steuerung
- I: Normalstellung
- II: Schrägstellung
- A: Arbeitsrichtung
- L: Längsmittelachse
- Q: Querlinie

## Patentansprüche

1. Schneidwerk (2) zum Anbau an eine Erntemaschine mit einem sich zumindest im Wesentlichen über die Arbeitsbreite (4) des Schneidwerks (2) erstreckenden Rahmen (24), an der Vorderseite des Schneidwerks (2) angeordneten und mit dem Rahmen (24) verbundenen Schneidelementen (6), Förderflächen (18) und Förderelementen (8) zur Abförderung des geschnittenen Ernteguts von den Schneidelementen (6) zu einer Abgabestelle (22), und einer oberhalb der Förderfläche (18) von einem Haspeltragwerk (30) gehaltenen mehrteiligen Haspel (10), deren Haspelteile (12a, 12b, 12c) auf einer jeweiligen Haspelwelle (20a, 20b, 20c) gehalten sind, die in horizontaler Richtung verstellbar sind, **dadurch gekennzeichnet, dass** das Schneidwerk (2) eine Vorrichtung (34) aufweist, mit der Haspelteile (12a, 12b, 12c) in zumindest einer Position am Haspeltragwerk (30) festlegbar sind, in der ihre Haspelwelle (20a, 20b, 20c) in einer horizontalen Ebene eine Winkelstellung zu einer Querlinie (Q) zur Längsmittelachse (L) durch das Schneidwerk (2) aufweist, so dass die schräg gestellten Haspelteile mit ihren weiter nach hinten verlagerten Haspelabschnitten das geschnittene Erntegut weiter von den Schneidelementen entfernt in einer größeren Tiefe der Förderfläche ablegen.

2. Schneidwerk (2) nach Anspruch 1, **dadurch gekennzeichnet, dass** es sich bei der Vorrichtung (34), mit der die Haspelwellen (20a, 20b, 20c) aus der Normalstellung (I) in die Schrägstellung (II) verlagerbar sind, um einen Stellmotor (34a) handelt, mit dem ein dem Stellmotor (34a) zugeordneter Wellenstummel der Haspelwelle (20a, 20b, 20c) in horizontaler Richtung verlagerbar ist.

3. Schneidwerk (2) nach Anspruch 2, **dadurch gekennzeichnet, dass** der ein Haspelteil (12a, 12b, 12c) in eine Schrägstellung (II) bringende oder aus einer Schrägstellung (II) in eine Normalstellung (I) zurückbewegende Stellmotor (34a) über eine Steuerung (36) einzeln ansteuerbar ist.

4. Schneidwerk (2) nach einem der vorhergehenden Ansprüche 1 bis 3, **dadurch gekennzeichnet, dass** die Vorrichtung (34) zur Schrägstellung (II) aus einem manuell verlagerbaren Schlitten, der in verschiedenen Positionen am Haspeltragarm (14) festlegbar ist, oder aus verschiedenen Montagepositionen besteht, in denen der Stellmotor (34a) zur Verlagerung der Haspelwellen (20a, 20b, 20c) oder die Haspelwellen (20a, 20b, 20c) in verschiedenen Positionen auf dem Haspeltragarm (14) festlegbar sind.

5. Schneidwerk (2) nach einem der vorhergehenden Ansprüche, **dadurch gekennzeichnet, dass** die äußeren Enden der schräg gestellten Haspelteile (12a, 12c) in der Schrägstellung (II) im Verhältnis zu den inneren Enden der schräg gestellten Haspelteile (12a, 12c) weiter nach hinten verlagert sind.

6. Schneidwerk (2) nach einem der vorhergehenden Ansprüche, **dadurch gekennzeichnet, dass** als Förderelemente (8) umlaufend angetriebene Bandförderer (8a, 8b, 8c) verwendet sind.

7. Schneidwerk (2) nach einem der vorhergehenden Ansprüche, **dadurch gekennzeichnet, dass** der Rahmen des Schneidwerks (2) in mehrere Rahmenteile (26a, 26b, 26c) unterteilt ist, die zueinander verschwenkbar sind, und die Arbeitsbreiten (28a, 28c) der äußeren Haspelteile (12a, 12b, 12c) den Arbeitsbreiten (28a, 28c) der diesen zugeordneten äußeren Rahmenteile (26a, 26c) entsprechen oder diese überschreiten.

8. Schneidwerk (2) nach einem der vorhergehenden Ansprüche1, 2, oder 5 bis 7, **dadurch gekennzeichnet, dass** es sich bei der Vorrichtung (34) zur Schrägstellung (II) der Haspelteile (12a, 12b, 12c) um eine motorisch angetriebene Verstellvorrichtung handelt und diese eine Steuerung aufweist, mit der die Haspelteile (12a, 12b, 12c) in einer horizontalen Ebene gleichzeitig gleichsinnig in ihrer Schrägstellung (II) verstellbar sind.

9. Schneidwerk (2) nach einem der vorhergehenden Ansprüche1, 2, oder 5 bis 8, **dadurch gekennzeichnet, dass** es sich bei der Vorrichtung (34) zur Schrägstellung (II) der Haspelteile (12a, 12c) um Hydraulikzylinder handelt, die zumindest teilweise hydraulisch in Reihe geschaltet sind, die an den Außenseiten der äußeren Haspelteile (12a, 12c) vorhandenen Hydraulikzylinder mit Überströmventilen zur Gleichrichtung der Zylinderstellung in beiden Endlagen ausgestattet sind, ein dort auftretender Überstrom dem oder den Hydraulikzylindern an den inneren Enden der äußeren Haspelteile (12a, 12c) über eine Verbindungsleitung zugeleitet wird, und der oder die an den inneren Enden der äußeren Haspelteile (12a, 12c) angeordneten Hydraulikzylinder über einen längeren Verstellweg verfügen als die äußeren Hydraulikzylinder.

## Claims

1. A header (2) for mounting on a harvesting machine comprising a frame (24) extending at least substantially over the working width (4) of the header (2), cutting elements (6) arranged on the front side of the header (2) and connected to the frame (24), conveying surfaces (18) and conveying elements (8) for conveying the cut crop from the cutting elements (6) to a discharge point (22), and a multi-part reel (10), the reel parts (12a, 12b, 12c) of which are held on a respective reel shaft (20a, 20b, 20c) and are adjustable in the horizontal direction, said multi-part reel being held above the conveying surface (18) by a reel supporting structure (30), **characterized in that** the header (2) has a device (34) with which reel parts (12a, 12b, 12c) can be fixed in at least one position on the reel supporting structure (30), in which position the reel shaft (20a, 20b, 20c) thereof has, in a horizontal plane, an angular position with respect to a transverse line (Q) to the longitudinal central axis (L) through the header (2), so that the obliquely positioned reel parts, with their reel sections moved further back, deposit the cut crop further away from the cutting elements at a greater depth of the conveying surface.

2. The header (2) according to claim 1, **characterized in that** the device (34), by means of which the reel shafts (20a, 20b, 20c) can be displaced from the normal position (I) into the inclined position (II), is a servomotor (34a) with which a shaft stub of the reel shaft (20a, 20b, 20c) assigned to the servomotor (34a) is displaceable in the horizontal direction.

3. The header (2) according to claim 2, **characterized in that** the servomotor (34a), which brings a reel part (12a, 12b, 12c) into an inclined position (II) or moves it back from an inclined position (II) into a normal position (I), can be controlled on an individual basis via a controller (36).

4. The header (2) according to any of the preceding claims 1 to 3,
**characterized in that** the device (34) for inclination (II) consists of a manually displaceable carriage, which can be fixed in different positions on the reel support arm (14), or consists of different mounting positions in which the servomotor (34a) for displacing the reel shafts (20a, 20b, 20c) or the reel shafts (20a, 20b, 20c) can be fixed in different positions on the reel support arm (14).

5. The header (2) according to any of the preceding claims,
**characterized in that** the outer ends of the obliquely positioned reel parts (12a, 12c) are displaced further back in relation to the inner ends of the obliquely positioned reel parts (12a, 12c) when in the inclined position (II).

6. The header (2) according to any of the preceding claims,
**characterized in that** circumferentially driven belt conveyors (8a, 8b, 8c) are used as conveyor elements (8).

7. The header (2) according to any of the preceding claims,
**characterized in that** the frame of the header (2) is divided into a plurality of frame parts (26a, 26b, 26c), which frame parts are pivotable relative to one another, and the working widths (28a, 28c) of the outer reel parts (12a, 12b, 12c) correspond to or exceed the working widths (28a, 28c) of the outer frame parts (26a, 26c) associated therewith.

8. The header (2) according to any of the preceding claims 1, 2, or 5 to 7,
**characterized in that** the device (34) for the inclination (II) of the reel parts (12a, 12b, 12c) is a motor-driven adjusting device and has a controller with which the reel parts (12a, 12b, 12c) can be simultaneously adjusted in a horizontal plane in the same direction as the inclination (II).

9. The header (2) according to any of the preceding claims 1, 2, or 5 to 8,
**characterized in that** the device (34) for the inclination (II) of the reel parts (12a, 12c) involves hydraulic cylinders which are connected at least partially hydraulically in series, that the hydraulic cylinders present on the outer sides of the outer reel parts (12a, 12c) are equipped with overflow valves for rectifying the cylinder position in both end positions, that an excess flow occurring there is fed to the hydraulic cylinder(s) at the inner ends of the outer reel parts (12a, 12c) via a connecting line, and that the hydraulic cylinder(s) arranged at the inner ends of the outer reel parts (12a, 12c) have a longer adjustment path than the outer hydraulic cylinders.

## Revendications

1. Mécanisme de coupe (2) destiné à être monté sur une moissonneuse, comportant un cadre (24) s'étendant au moins sensiblement sur la largeur de travail (4) du mécanisme de coupe (2), des éléments de coupe (6) disposés sur la face avant du mécanisme de coupe (2) et reliés au cadre (24), des surfaces de transport (18) et des éléments de transport (8) pour le transport du produit de récolte coupé à partir des éléments de coupe (6) jusqu'à un point d'enlèvement (22), et un rabatteur (10) à plusieurs pièces maintenu au-dessus de la surface de transport (18) par une structure porteuse de rabatteur (30) et dont les pièces de rabatteur (12a, 12b, 12c) sont maintenues sur un arbre de rabatteur (20a, 20b, 20c) respectif qui est réglable dans la direction horizontale, **caractérisé en ce que** le mécanisme de coupe (2) présente un dispositif (34) au moyen duquel des pièces de rabatteur (12a, 12b, 12c) peuvent être fixées dans au moins une position sur la structure porteuse de rabatteur (30), dans laquelle position leur arbre de rabatteur (20a, 20b, 20c) présente, dans un plan horizontal, une position angulaire par rapport à une ligne transversale (Q) par rapport à l'axe longitudinal médian (L) à travers le mécanisme de coupe (2), de telle sorte que les pièces de rabatteur placées en biais déposent, avec leurs sections de rabatteur déplacées plus en arrière, le produit de récolte coupé à plus grande distance des éléments de coupe à une plus grande profondeur de la surface de transport.

2. Mécanisme de coupe (2) selon la revendication 1,
**caractérisé en ce qu'**il s'agit, en ce qui concerne le dispositif (34) au moyen duquel les arbres de rabatteur (20a, 20b, 20c) peuvent être déplacés de la position normale (I) dans la position en biais (II), d'un servomoteur (34a), au moyen duquel un bout d'arbre associé au servomoteur (34a) de l'arbre de rabatteur (20a, 20b, 20c) peut être déplacé dans la direction horizontale.

3. Mécanisme de coupe (2) selon la revendication 2,
**caractérisé en ce que** le servomoteur (34a) amenant une pièce de rabatteur (12a, 12b, 12c) dans une position en biais (II) ou la ramenant d'une position en biais (II) dans une position normale (I) peut être commandé individuellement par l'intermédiaire d'un appareil de commande (36).

4. Mécanisme de coupe (2) selon l'une des revendications 1 à 3 précédentes, **caractérisé en ce que** le dispositif (34) permettant la prise de la position en biais (II) est composé d'un chariot pouvant être déplacé manuellement, lequel peut être fixé dans différentes positions sur le bras porteur de rabatteur (14), ou est composé de différentes positions de montage, dans lesquelles le servomoteur (34a) permettant le déplacement des arbres de rabatteur (20a, 20b, 20c) ou les arbres de rabatteur (20a, 20b, 20c) peuvent être fixés dans différentes positions sur le bras porteur de rabatteur (14).

5. Mécanisme de coupe (2) selon l'une des revendications précédentes, **caractérisé en ce que** les extrémités extérieures des pièces de rabatteur (12a, 12c) placées en biais sont, dans la position en biais (II), déplacées plus en arrière par rapport aux extrémités intérieures des pièces de rabatteur (12a, 12c) placées en biais.

6. Mécanisme de coupe (2) selon l'une des revendications précédentes, **caractérisé en ce que** des bandes transporteuses (8a, 8b, 8c) entraînées en boucle sont utilisées comme éléments de transport (8).

7. Mécanisme de coupe (2) selon l'une des revendications précédentes, **caractérisé en ce que** le cadre du mécanisme de coupe (2) est divisé en plusieurs pièces de cadre (26a, 26b, 26c), lesquelles peuvent être pivotées les unes par rapport aux autres, et les largeurs de travail (28a, 28c) des pièces de rabatteur (12a, 12b, 12c) extérieures correspondent aux largeurs de travail (28a, 28c) des pièces de cadre (26a, 26c) extérieures qui leur sont associées ou dépassent celles-ci.

8. Mécanisme de coupe (2) selon l'une des revendications 1, 2, ou 5 à 7 précédentes, **caractérisé en ce qu'**il s'agit, en ce qui concerne le dispositif (34) permettant la prise de la position en biais (II) des pièces de rabatteur (12a, 12b, 12c), d'un dispositif de réglage entraîné par moteur et celui-ci présente un appareil de commande, au moyen duquel les pièces de rabatteur (12a, 12b, 12c) peuvent être réglées dans un plan horizontal simultanément et dans la même direction dans leur position en biais (II).

9. Mécanisme de coupe (2) selon l'une des revendications 1, 2, ou 5 à 8 précédentes, **caractérisé en ce qu'**il s'agit, en ce qui concerne le dispositif (34) permettant la prise de la position en biais (II) des pièces de rabatteur (12a, 12c), de vérins hydrauliques, lesquels sont montés au moins en partie de manière hydraulique en série, les vérins hydrauliques présents sur les côtés extérieurs des pièces de rabatteur (12a, 12c) extérieures sont équipés de soupapes de décharge pour le redressement de la position des vérins dans les deux positions finales, une surcharge s'y produisant est guidée, par l'intermédiaire d'une conduite de liaison, vers le ou les vérins hydrauliques au niveau des extrémités intérieures des pièces de rabatteur (12a, 12c) extérieures, et le ou les vérins hydrauliques disposés au niveau des extrémités intérieures des pièces de rabatteur (12a, 12c) extérieures disposent d'une course de réglage plus longue que celle des vérins hydrauliques extérieurs.
